# EUROPÄISCHE PATENTANMELDUNG

(11) **EP 1 843 149 A2**
(43) Veröffentlichungstag der Anmeldung: **10.10.2007**
(21) Anmeldenummer: 07005801.1
(22) Anmeldetag: 21.03.2007
(51) Int. Cl.: G01N 21/89, B41F 33/00

(54) **Vorrichtung zur Messung einer Spektralverteilung eines mit einer Druckeinrichtung hergestellten Druckerzeugnisses**

(30) Priorität: 03.04.2006 DE 102006015375
(71) Anmelder: Theta System Elektronik GmbH, 82194 Gröbenzell (DE)
(72) Erfinder: Tatarczyk, Christina, 82194 Groebenzell (DE); Tatarczyk, Joachim, 82194 Groebenzell (DE)
(74) Vertreter: Rothkopf, Ferdinand

(57) **Zusammenfassung**

Eine Vorrichtung (10) zur Messung einer Spektralverteilung eines mit einer Druckeinrichtung hergestellten Druckerzeugnisses (12) mit einem Leuchtmittel (20) zum Beleuchten des Druckerzeugnisses (12), einem optoelektronischen Messmittel (32) zum Messen des Remissionswertes eines Abschnitts des Spektrums des vom Druckerzeugnis (12) remittierten Lichtes (26), einem optischen Dispersionsmittel (28) zum Dispergieren der Wellenlängen des remittierten Lichtes (26) und einer für das Dispersionsmittel (28) maßgeblichen Lichteintrittsspaltebene, ist erfindungsgemäß dadurch gekennzeichnet, dass die für das Dispersionsmittel (28) maßgebliche Lichteintrittsspaltebene durch die Oberfläche des zu untersuchenden Druckerzeugnisses (12) geschaffen ist.

## Beschreibung

Die Erfindung betrifft eine Vorrichtung zur Messung einer Spektralverteilung eines mit einer Druckeinrichtung hergestellten Druckerzeugnisses, welche ein Leuchtmittel zum Beleuchten des Druckerzeugnisses, ein optoelektronisches Messmittel zum Messen des Remissionswertes mindestens eines Abschnitts des Spektrums des vom Druckerzeugnis remittierten Lichtes, ein optisches Dispersionsmittel zum Dispergieren der Wellenlängen des remittierten Licht und eine für das Dispersionsmittel maßgebliche Lichteintrittsspaltebene aufweist.

In der graphischen Industrie sind verschiedene Arten der Qualitätsüberwachung und Steuerung von Druckprozessen bekannt. Eine der dabei verwendeten Messverfahren ist das Farbmessen mittels einer Analyse der Spektralverteilung des von einem Druckerzeugnis remittierten Lichtes. Spektral messende Vorrichtungen lösen das Spektrum des remittierten Lichtes in Bandbreiten von beispielsweise 20 oder weniger Nanometer auf und bestimmen daraus die dazugehörigen Remissionswerte. Aus den Remissionswerten können nachfolgend verschiedene Farbkennwerte abgeleitet werden. Die Zerlegung des Spektrums des remittierten Lichtes kann durch Verlaufsfilter, Prismen oder Beugungsgitter erfolgen, wobei in modernen Vorrichtungen Gitter wegen ihrer hohen Auflösung bevorzugt werden.

Um das von einem Beugungsgitter zerlegte bzw. gebeugte remittierte Licht in seinen verschieden gebeugten Spektralbereichen messen zu können, sind verschiedene Techniken bekannt. Bei diesen Techniken wird unter anderem das verwendete Gitter geschwenkt und dabei das Licht auf ein einzelnes Photoelement gerichtet. Alternativ ist es bekannt, durch einen Eintrittsspalt hindurch auf ein Beugungsgitter einen linienförmigen Lichtstrahl zu lenken, welcher in eine rechteckige Fläche gebeugt wird. Der derart gebeugte Lichtstrahl wird in dieser Fläche mittels eines Zeilen- oder Flächensensors mit einer Vielzahl Photoelemente gemessen. Allerdings sind bei allen diesen Vorrichtungen zwischen dem zu messendem Erzeugnis und dem Eintrittsspalt aufwendige Optiken erforderlich. Ferner sind auch zwischen dem Gitter und dem Messmittel Optiken, insbesondere Prismen erforderlich.

### Zugrundeliegende Aufgabe

Der Erfindung liegt die Aufgabe zugrunde, eine Vorrichtung zur Messung einer Spektralverteilung eines mit einer Druckeinrichtung hergestellten Druckerzeugnisses der eingangs genannten Art bei gleicher oder verbesserter Messqualität kostengünstiger und kompakter zu gestalten.

### Erfindungsgemäße Lösung

Diese Aufgabe ist erfindungsgemäß mit einer Vorrichtung zur Messung einer Spektralverteilung gemäß Anspruch 1 gelöst.

Erfindungsgemäß ist eine gattungsgemäße Vorrichtung zur Messung einer Spektralverteilung eines mit einer Druckeinrichtung hergestellten Druckerzeugnisses dahingehend verbessert, dass die für das Dispersionsmittel maßgebliche Lichteintrittsspaltebene durch die Oberfläche des zu untersuchenden Druckerzeugnisses selbst geschaffen ist. Mit anderen Worten ist erfindungsgemäß der von dem Messmittel geprüfte Lichtstrahl nicht jener, der durch einen Eintrittsspalt dem Messmittel zugeleitet wird, sondern es ist ein Lichtstrahl, welcher linienförmig unmittelbar von der Oberfläche des zu prüfenden Druckerzeugnisses remittiert wird.

Mit der erfindungsgemäßen Lösung ist eine besonders kostengünstig herzustellende, zu montierende und auch zu wartende Vorrichtung geschaffen. Dies ist gelungen, indem auf das Messmittel einer Vorrichtung zur Messung einer Spektralverteilung ein ca. 1 mm bis ca. 2 mm breiter spalt- bzw. linienförmiger Lichtstrahl geleitet wird, welcher direkt in dieser "Spaltform" von der zu untersuchenden Oberfläche des Druckerzeugnisses remittiert wird. Die erfindungsgemäße Lösung kann dadurch auf eine aufwendige Optik zwischen dem Erzeugnis und einem Eintrittsspalt eines Spektroskops verzichten.

Die Erfindung basiert unter anderem auf der Erkenntnis, dass es nicht notwendig ist, das zu untersuchende Erzeugnis möglichst großflächig und homogen zu beleuchten, sondern dass eine punktuelle bzw. örtlich begrenzte Beleuchtung erheblich sinnvoller ist, wenn der begrenzt beleuchtete Bereich des Druckerzeugnisses zugleich als Eintrittslichtstrahl für eine erfindungsgemäße Vorrichtung verwendet wird. In der Vorrichtung wird der Eintrittslichtstrahl nachfolgend gebeugt, dispergiert bzw. zerlegt.

Auch auf den Eintrittsspalt bzw. eine Eintrittsspaltblende selbst kann erfindungsgemäß verzichtet werden, nämlich dadurch, dass die Spaltform des für das Dispersionsmittel maßgeblichen Eintrittslichtstrahls durch eine lineare Beleuchtung des zu untersuchenden Druckerzeugnisses geschaffen ist. Die lineare Beleuchtung kann besonders vorteilhaft mittels einer Zylinderlinse bzw. -optik und ggf. einer Blende vor dem Leuchtmittel geschaffen sein. Dabei sind an die Qualität und die Genauigkeit dieser optischen Elemente Zylinderoptik und Blende erheblich geringere Anforderungen zu stellen, als an bekannte Optiken, wie sie zwischen einem zu messendem Erzeugnis und einem Eintrittsspalt bekannter Spektroskope vorgesehen sind.

Als Leuchtmittel für die erfindungsgemäße Vorrichtung wird besonders vorteilhaft mindestens einer Leuchtdiode verwendet, welche bei geringen Kosten und geringem Raumverbrauch eine große Lichtmenge bereitstellt. Die Ebene des vom Leuchtmittel auf das zu messende Erzeugnis gerichteten Beleuchtungslichtstrahls ist vorteilhaft in einem Winkel von ca. 45° zur Oberfläche des Druckerzeugnisses sowie insbesondere auch in einem Winkel von ca. 45° zur Sicht- bzw. Betrachtungsrichtung des Messmittels geneigt. Die Sichtrichtung ist dabei zugleich die Richtung des vom Druckerzeugnis zum Dispersionsmittel remittierten spaltförmigen Lichtstrahls, welcher dann an diesem Dispersionsmittel gebeugt wird.

Erfindungsgemäß bevorzugt wird als Dispersionsmittel ein Beugungsgitter, welches, wie eingangs erwähnt eine hohe Auflösung der Spektralverteilung ermöglicht. Als Gitter wird ein Transmissionsgitter bevorzugt. Alternativ kann auch ein Reflexionsgitter zum Einsatz kommen. Gegebenenfalls können auch Prismen oder Verlaufsfilter verwendet werden, wobei allerdings dem Transmissionsgitter wegen der damit erzielbaren kompakten Bauweise der erfindungsgemäßen Vorrichtung klar der Vortritt gegeben wird.

Die Bevorzugung eines Transmissionsgitters beruht nicht zuletzt auch darauf, dass bei der erfindungsgemäßen Vorrichtung ferner bevorzugt zwischen dem Messmittel und dem Dispersionsmittel lediglich eine Abbildungslinse bzw. -optik angeordnet ist. Auf aufwendige Prismensysteme, wie sie in diesem Bereich bei bekannten Spektroskopen vorgesehen sind, wird erfindungsgemäß hingegen bewusst verzichtet.

Möglich ist dieser Verzicht, weil als Messmittel erfindungsgemäß insbesondere ein Sensor verwendet wird, welcher eine Vielzahl Photoelemente aufweist und entsprechend eine hohe Auflösung bieten kann. Besonders bevorzugt wird als Messmittel ein kostengünstiger Flächensensor verwendet, wie er aus herkömmlichen digitalen Kameras für Bildaufnahmen bekannt ist.

Die erfindungsgemäße Vorrichtung kann ferner insbesondere dadurch besonders kompakt und ohne aufwendige Prismen-Optiken im Strahlengang gestaltet werden, dass die aus optoelektronischem Messmittel und optischem Dispersionsmittel, sowie insbesondere auch aus der Abbildungsoptik, gebildete Anordnung in ihrer Längsausrichtung schräg zur Richtung des vom Druckerzeugnis remittierten und auf das Dispersionsmittel einfallenden Lichtstrahls ausgerichtet ist. Die Anordnung ist insbesondere vorteilhaft in einem Winkel von zwischen ca. 20° und ca. 40° zur Richtung des auf das Dispersionsmittel einfallenden Lichtstrahls schräg gestellt.

Um die erfindungsgemäße Vorrichtung hinsichtlich ihrer Messgenauigkeit weiter zu verbessern, ist ferner über der Oberfläche des Druckerzeugnisses bevorzugt eine Blende zum Zurückhalten von von dem Druckerzeugnis remittiertem Fremdlicht vorgesehen.

Schließlich ist zur Erhöhung der Messgenauigkeit bei einem flächigen Druckerzeugnis, welches insbesondere bahnförmig sein kann, in jenem Bereich der von dem Messmittel untersucht wird, für eine Abstützung des Druckerzeugnisses gesorgt. Die Abstützung stellt sicher, dass sich die Lage des Druckerzeugnisses bzw. dessen Abstand relativ zum Rest der Vorrichtung nicht ändert. Insbesondere ist das Druckerzeugnis derart gehalten, dass es sich zwar unter dem Leuchtmittel und dem Dispersionsmittel zwar als Bahn vorbeibewegen kann, dabei aber sich nicht die Lage des beleuchteten Lichtstreifens verändert. Geschaffen wird eine derartige Abstützung bevorzugt mittels einer Stützrolle, deren Drehachse in Richtung des remittierten Lichtstrahls unter dem Druckerzeugnis an der Stelle von dessen streifenförmig beleuchtetem Bereich angeordnet ist.

### Kurzbeschreibung der Zeichnungen

Nachfolgend wird ein Ausführungsbeispiel einer erfindungsgemäßen Vorrichtung anhand der beigefügten schematischen Zeichnungen näher erläutert. Es zeigt:

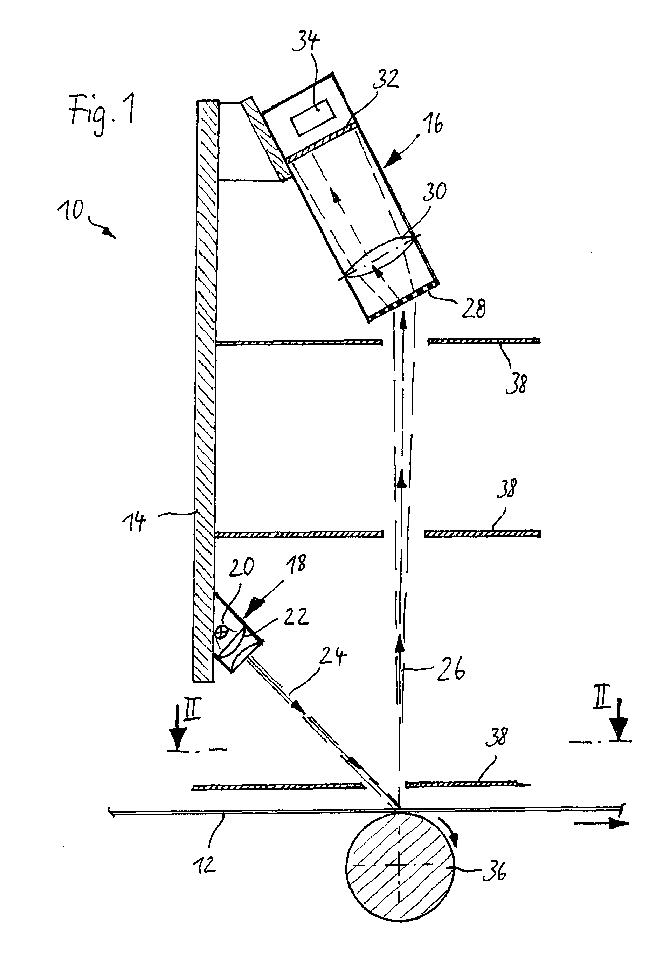

- Fig. 1: einen Längsschnitt eines Ausführungsbeispiels einer erfindungsgemäßen Vorrichtung zur Messung einer Spektralverteilung eines mit einer Druckeinrichtung hergestellten Druckerzeugnisses und

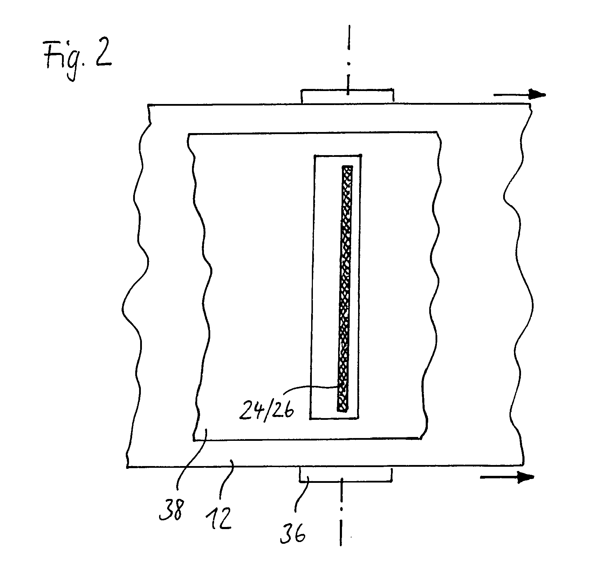

- Fig. 2: den Schnitt II-II in Fig. 1.

### Detaillierte Beschreibung des Ausführungsbeispiels

In den Fig. ist eine Vorrichtung 10 zur Überwachung der Qualität eines mit einer weiter nicht dargestellten Druckeinrichtung erzeugten flächigen Druckerzeugnisses 12 dargestellt. Das Druckerzeugnis 12 ist bahnförmig und wird bezogen auf die Fig. von links nach rechts unter der Vorrichtung 10 hindurchbewegt. Auf dem Druckerzeugnis 12 befinden sich aufgedruckte graphische Abbildungen, die hinsichtlich der Qualität ihres Druckbildes zu prüfen sind.

Die Vorrichtung umfasst einen im Wesentlichen senkrecht ausgerichteten stabförmigen Halter 14, an dessen oberem Endabschnitt eine Kameraeinheit 16 und an dessen unterem Endabschnitt eine Leuchteinheit 18 gehaltert sind.

Die Leuchteinheit 18 umfasst ein Leuchtmittel 20 in Form einer weißes Licht abstrahlenden Leuchtdiode, vor der im Strahlengang eine Zylinderoptik 22 angeordnet ist. Die Zylinderoptik 22 bündelt das von der Leuchtdiode 20 ausgesendete Licht zu einem ca. 1 mm bis 2 mm breiten streifenförmigen bzw. spaltförmigen Beleuchtungslichtstrahl 24, dessen Strahlebene in einem Winkel von ca. 45° direkt auf die zu untersuchende Oberfläche des Druckerzeugnisses 12 gerichtet ist.

Von der derart streifenförmig beleuchteten Oberfläche des Druckerzeugnisses 12 wird ein ebenfalls streifen- bzw. spaltförmiger Lichtstrahl 26 in Richtung auf die Kameraeinheit 16 remittiert. Die Hauptstrahlungsrichtung des Lichtstrahls 26 ist dabei etwa in einem Winkel von 90° zur Oberfläche bzw. Ebene des flächigen Druckerzeugnisses 12 gerichtet.

Der Lichtstrahl 26 trifft an einem Dispersionsmittel 28 in Gestalt eines Beugungsgitters auf die Kameraeinheit 16. An diesem Dispersionsmittel 28 wird das Spektrum des vom Druckerzeugnis 12 remittierten Lichtstrahls 26 zerlegt bzw. gebeugt und es gelangt ein "aufgefächerter" Lichtstrahl 26 weiter zu einer im Innern der Kameraeinheit 16 angeordneten Abbildungsoptik 30. Mit dieser Abbildungsoptik 30 wird der remittierte und gebeugte Lichtstrahl 26 in seiner Ausrichtung geringfügig korrigiert, damit er ein hinter der Abbildungsoptik 30 befindliches Messmittel 32 in Gestalt eines rechteckigen Flächensensors möglichst weitgehend abdeckt. Das Messmittel 32 ist dabei mit einer Vielzahl einzelner Photoelemente versehen, die einzeln das einfallende Licht hinsichtlich seiner Lichtestärke an eine hinter dem Messmittel 32 angeordnete Auswerteelektronik 36 melden können.

Die Kameraeinheit 16 ist dabei zusammen mit ihrem Dispersionsmittel 28, ihrer Abbildungsoptik 30 und ihrem Messmittel 32 in einem Winkel von ca. 30° derart zur Längsrichtung des remittierten Lichtstrahls 26 schräg gestellt, dass das vom Dispersionsmittel 28 gebeugte Licht ohne aufwendige optische Korrekturmittel, wie beispielsweise Prismen, nahezu vollflächig auf das Messmittel 32 projiziert wird.

Zur Verbesserung der Messgenauigkeit der gesamten Vorrichtung 10 ist das flächige Druckerzeugnis 12 in dem vom Beleuchtungslichtstrahl 24 beleuchteten Bereich mittels einer Stützeinrichtung 36 in Form einer Stützrolle nach unten hin abgestützt. Ferner sind um den Beleuchtungslichtstrahl 24 und den remittierten Lichtstrahl 26 herum in angepasstem Abstand insgesamt noch drei Blenden 38 in im Wesentlichen paralleler Lage zur Oberfläche des Druckereierzeugnisses 12 angeordnet, mit denen Fremdlicht vom Dispersionsmittel 28 der Kameraeinheit 16 abgehalten wird.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Vorrichtung
- 12: Druckerzeugnis
- 14: Halter
- 16: Kameraeinheit
- 18: Leuchteinheit
- 20: Leuchtmittel
- 22: Zylinderoptik
- 24: Beleuchtungslichtstrahl
- 26: remittierter Lichtstrahl
- 28: Dispersionsmittel
- 30: Abbildungsoptik
- 32: Messmittel
- 34: Elektronik
- 36: Stützeinrichtung
- 38: Blende

## Patentansprüche

1. Vorrichtung (10) zur Messung einer Spektralverteilung eines mit einer Druckeinrichtung hergestellten Druckerzeugnisses (12) mit einem Leuchtmittel (20) zum Beleuchten des Druckerzeugnisses (12), einem optoelektronischen Messmittel (32) zum Messen des Remissionswertes eines Abschnitts des Spektrums des vom Druckerzeugnis (12) remittierten Lichtes (26), einem optischen Dispersionsmittel (28) zum Dispergieren der Wellenlängen des remittierten Lichtes (26) und einer für das Dispersionsmittel (28) maßgeblichen Lichteintrittsspaltebene,
**dadurch gekennzeichnet, dass** die für das Dispersionsmittel (28) maßgebliche Lichteintrittsspaltebene durch die Oberfläche des zu untersuchenden Druckerzeugnisses (12) geschaffen ist.

2. Vorrichtung nach Anspruch 1,
**dadurch gekennzeichnet, dass** die Spaltform des für das Dispersionsmittel (28) maßgeblichen remittierten Lichtes (26) durch eine lineare Beleuchtung (20, 22, 24) des zu untersuchenden Druckerzeugnisses (12) geschaffen ist.

3. Vorrichtung nach Anspruch 1 oder 2,
**dadurch gekennzeichnet, dass** die Beleuchtung (20, 22, 24) des Druckerzeugnisses (12) mittels mindestens einer Leuchtdiode gestaltet ist.

4. Vorrichtung nach einem der Ansprüche 1 bis 3,
**dadurch gekennzeichnet, dass** das Dispersionsmittel (28) mit eines Beugungsgitters gestaltet ist.

5. Vorrichtung nach einem der Ansprüche 1 bis 4,
**dadurch gekennzeichnet, dass** zwischen dem Messmittel (32) und dem Dispersionsmittel (28) lediglich eine Abbildungsoptik (30) angeordnet ist.

6. Vorrichtung nach einem der Ansprüche 1 bis 5,
**dadurch gekennzeichnet, dass** das Messmittel (32) als ein Flächensensor gestaltet ist.

7. Vorrichtung nach einem der Ansprüche 1 bis 6,
**dadurch gekennzeichnet, dass** die aus dem Messmittel (32) und dem Dispersionsmittel (28), sowie insbesondere auch der Abbildungsoptik (30), gebildete Anordnung (16) in ihrer Längsausrichtung schräg zur Richtung des vom Druckerzeugnis (12) remittierten und auf das Dispersionsmittel (28) einfallenden Lichtstrahls (26) ausgerichtet ist.

8. Vorrichtung nach einem der Ansprüche 1 bis 7,
**dadurch gekennzeichnet, dass** über der Oberfläche des Druckerzeugnisses (12) eine Blende (38) zum Zurückhalten von von dem Druckerzeugnis (12) remittiertem Fremdlicht vorgesehen ist.

9. Vorrichtung nach einem der Ansprüche 1 bis 8,
**dadurch gekennzeichnet, dass** das Druckerzeugnis (12) flächig, insbesondere bahnförmig, ist und in einem Bereich von dem Messmittel (32) untersucht wird, in dem es mittels einer Stützeinrichtung (36) abgestützt ist.
